Europäisches Patentamt

**European Patent Office**

**Office européen des brevets**

(11) Veröffentlichungsnummer: **0 039 659**
**A1**

## (12) EUROPÄISCHE PATENTANMELDUNG

(21) Anmeldenummer: 81810116.4

(22) Anmeldetag: 24.03.81

(51) Int. Cl.³: **C 23 F 5/02**

(30) Priorität: 19.04.80 CH 2997/80

(43) Veröffentlichungstag der Anmeldung: 11.11.81
**Patentblatt 81/45**

(84) Benannte Vertragsstaaten: **DE FR GB IT**

(71) Anmelder: **Fischer, Kurt, 8, route Belvédère,
CH-1752 Villars-sur-Glàne (CH)**

(72) Erfinder: **Fischer, Kurt, 8, route Belvédère,
CH-1752 Villars-sur-Glàne (CH)**

(54) **Verfahren zur Herstellung von schwarzen Oberflächen auf Metall.**

㊗ Verfahren zur Herstellung von schwarzen Metalloberflächen, wobei die Schwärzung durch das Kontaktfeuer von Elektroden aus Kohle oder einer kohlehaltigen Substanz erzielt wird. Hierbei werden die Elektroden bei einem Anstellwinkel von ca. 65° über die Metalloberfläche gestrichen.

EP 0 039 659 A1

0039659

Beschreibung

## Verfahren zur Herstellung von schwarzen Metalloberflächen

Schwarze Metalloberflächen werden für Sonnenkollektoren und andere Wärmegewinnungsanlagen verwendet.

Beim heutigen Stand der Technik geschieht das Schwärzen entweder durch Farbauftrag oder durch Aufbringung einer Oxydschicht)[*], in chemischen Bädern und in elektrolytischen Bädern)[**]. Die zu schwärzende Oberfläche muss dabei in jedem Fall vorbehandelt werden.

Der durch die Erfindung erreichte Vorteil ist im wesentlichen darin zu sehen, dass der Fett- und Schmutzfilm wie er sich beim Metallverarbeiten in der Werkstatt bildet, vor dem Schwärzen nicht beseitigt werden muss.

Ausführungsbeispiel: Beim Verfahren wie es der Patentanspruch beschreibt kann als Elektrodenmaterial Kohle oder kohlenhaltige Substanz verwendet werden. Hier kommen Kohlenstifte zur Anwendung, wie sie in Trockenbatterien enthalten sind (Durchm. 6mm, Länge 5,6cm). 15 Stk. solcher Stifte sind mit Messinghülsen und Kupferlitzen beweglich an einer stromleitenden Platte nebeneinander befestigt, sodass eine Art Rechen entsteht. Mit diesem Elektrodensatz wird bei einem Anstellwinkel von ca 65° mehrmals über die zu schwärzende, horizontal liegende Metalloberfläche gestrichen. Um eine optimale Schwärzung zu erreichen, wird das Gerät mit einer zweckdienlichen Vorrichtung in Spur

0039659

- 2 -

geführt. Die angelegte Spannung beträgt 24 Volt Gleichstrom, Plus an Elektrode, Minus am Blech. (Stromaufnahme pro Stift ca 10-20 Amp.)
Nach dem Arbeitsgang wird der lose Russ trocken oder nass abgewischt.

)* Comptoir Suisse 1979 CH Lausanne
Stand Sonnenenergie

)** Oeffentliche Patentschriften-Sammlung 1979 CH Bern

Patentanspruch

<u>Verfahren zur Herstellung von</u>
<u>schwarzen Metalloberflächen</u>

Verfahren zum Herstellen von schwarzen Oberflächen
auf Metall dadurch gekennzeichnet, dass die Schwärzung
durch das Kontaktfeuer geeigneter Elektroden entsteht.

Eine oder mehrere solcher Elektroden werden mit einem
gewissen Auflagedruck über die zu schwärzende Metalloberfläche bewegt. Bei angelegter elektrischer
Spannung hinterlässt das sich bildende Kontaktfeuer
eine schwarze Brandspur.

**Europäisches Patentamt**

## EUROPÄISCHER RECHERCHENBERICHT

EP 81810116.4

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DD - A - 140 482 (TESLA, NARODNI PODNIK) (05-03-1980) + Ansprüche + -- | 1 | C 23 F 5/02 |
| | DD - A - 138 678 (C. WEISSMANTEL et al.) + Anspruch 1 + -- | 1 | |
| | DE - A - 2 347 147 (HITACHI, LTD.) + Ansprüche + ---- | 1 | |

**RECHERCHIERTE SACHGEBIETE (Int. Cl.³)**

C 23 F

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |

| Recherchenort | Abschlußdatum der Recherche | Prüfer |
|---|---|---|
| WIEN | 22-06-1981 | SLAMA |

EPA form 1503.1   06.78